# EUROPEAN PATENT APPLICATION

(11) **EP 4 852 244 A1**
(43) Date of publication of application: **09.12.2026**
(21) Application number: 26182149.0
(22) Date of filing: 29.05.2026
(51) Int. Cl.: H02B 1/30

(54) **FEED BOX FOR A REMOTE POWER PANEL**

(30) Priority: 03.06.2025 US 202563816762 P; 19.02.2026 US 202619544353
(71) Applicant: Vertiv Corporation, Westerville, OH 43082 (US)
(72) Inventor: STRAIN, Michael, Westerville, 43082 (US); CALDWELL, Carl, Westerville, 43082 (US)
(74) Representative: Bryn-Jacobsen, Caelia

(57) **Abstract**

An apparatus for a remote power panel (100) comprising a housing (106), a first conduit entry (108), a recessed region (110), a second conduit entry (112), and a cover (114). The housing (106) is configured to attach to a cabinet housing (104) of the remote power panel (100). The first conduit entry (108) is defined in the housing (106) and configured to receive a plurality of power cables. The recessed region (110) is formed along a side of the housing (106). The second conduit entry (112) is positioned within the recessed region (110) and configured to receive a plurality of control cables. The recessed region (110) physically separates the second conduit entry (112) from the first conduit entry (108). The cover (114) is configured to cover the recessed region (110).

## Description

### CROSS-REFERENCE TO RELATED APPLICATIONS

This application claims the benefit of U.S. Provisional Application No. 63/816,762, filed on June 3, 2025

### TECHNICAL FIELD

The following description related generally to power distribution equipment, and more particularly to an apparatus attachable to a remote power panel cabinet for facilitating the routing and separation of cables.

### BACKGROUND

Remote Power Panels (RPPs) are commonly used in data centers to distribute electrical power from centralized sources to various loads. The RPPs typically routing of both high-voltage power cables and low-voltage control wires into the cabinet of the RPP. High-voltage cables are necessary to supply power to the loads, while low-voltage control wiring is often used for monitoring, signaling, and communication with external systems.

Conventional RPP designs have utilized various conduit plate configurations to facilitate cable entry. One approach involved the use of a flat conduit plate. While planar in construction, the flat conduit plate provided poor clearance for installation of low-voltage conduit, complicating the routing process. Additionally, certain flat plate designs incorporated a cover piece that required screwdriver access from a front-face side, which could become obstructed once high-voltage power cables were installed, making subsequent low-voltage installation or maintenance cumbersome or impractical.

Other designs implemented a raised conduit plate. However, these designs lacked integrated low-voltage conduit protection. Low voltage control wires were left exposed upon entering the cabinet, and installers were required to independently determine methods for protecting and routing the low-voltage wiring. Moreover, the small physical footprint available around the raised conduit plate further constrained cable routing, making it difficult to achieve clean, protected, organized low-voltage installations.

As a result, prior RPP designs often created substantial challenges for accessing or modifying low-voltage wiring during initial installation and ongoing maintenance. Accessing or modifying the low-voltage wiring frequently required shutting down power to the RPP, resulting in operational downtime and increased risk during maintenance.

### SUMMARY

As an aspect of the disclosed examples includes an apparatus for a remote power panel. The apparatus comprises a housing configured to attach to a cabinet housing of the remote power panel; a first conduit entry defined in the housing and configured to receive a plurality of power cables; a recessed region formed along a side of the housing; and a second conduit entry positioned within the recessed region and configured to receive a plurality of control cables. The recessed region physically separates the second conduit entry from the first conduit entry.

These and other aspects of the present disclosure are disclosed in the following detailed description of the examples, the appended claims, and the accompanying figures.

### BRIEF DESCRIPTION OF THE DRAWINGS

These and other aspects, features and advantages will become readily apparent to those skilled in the art in view of the following detailed description of presently preferred examples and best mode, appended claims, and accompanying drawings.
FIG. 1A generally illustrates a prior art flat conduit plate for a remote power panel (RPP).
FIG. 1B generally illustrates a prior art raised conduit plate for the RPP.
FIG. 2 generally illustrates the RPP, according to the principles of the present disclosure.
FIG. 3 generally illustrates an exploded prospective view of a portion of a feed box for the RPP of FIG. 2.
FIG. 4 generally illustrates an exploded prospective view of a portion of the feed box of FIG. 3.
FIG. 5 generally illustrates a top view of the feed box of FIG. 3.

### DETAILED DESCRIPTION OF PREFERRED EXAMPLES

The following discussion is directed to various examples of the disclosure. Although one or more of these examples may be preferred, the examples disclosed should not be interpreted, or otherwise used, as limiting the scope of the disclosure, including the claims. In addition, one skilled in the art will understand that the following description has broad application, and the discussion of any example is meant only to be exemplary of that example, and not intended to intimate that the scope of the disclosure, including the claims, is limited to that example.

The present specification and accompanying drawings disclose one or more examples that incorporate the features of the present disclosure. The scope of the present disclosure is not limited to the disclosed examples. The disclosed examples merely exemplify the present disclosure, and modified versions of the disclosed examples are also encompassed by the present disclosure. Examples of the present disclosure are defined by the claims appended hereto.

References in the specification to "one example," "an example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to effect such feature, structure, or characteristic in connection with other examples whether or not explicitly described.

In the discussion, unless otherwise stated, adjectives such as "substantially," "approximately," and "about" modifying a condition or relationship characteristic of a feature or features of an example of the disclosure, are understood to mean that the condition or characteristic is defined to be within tolerances that are acceptable for operation of the example for an application for which it is intended.

Furthermore, it should be understood that spatial descriptions (e.g., "above," "below," "up," "left," "right," "down," "top," "bottom," "vertical," "horizontal," etc.) used herein are for purposes of illustration only, and that practical implementations of the structures described herein can be spatially arranged in any orientation or manner.

The word "example" is used herein to mean serving as an example, instance, or illustration. Any aspect or design described herein as "example" is not necessarily to be construed as preferred or advantageous over other aspects or designs. Rather, use of the word "example" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one implementation" throughout is not intended to mean the same example or implementation unless described as such.

Numerous exemplary examples are described as follows. It is noted that any section/subsection headings provided herein are not intended to be limiting. Examples are described throughout this document, and any type of example may be included under any section/subsection. Furthermore, examples disclosed in any section/subsection may be combined with any other examples described in the same section/subsection and/or a different section/subsection in any manner.

Remote Power Panels (RPPs) are commonly used in data centers to distribute electrical power from centralized sources to various loads. The RPPs typically routing of both high-voltage power cables and low-voltage control wires into the cabinet of the RPP. High-voltage cables are necessary to supply power to the loads, while low-voltage control wiring may be used for monitoring, signaling, and communication with external systems.

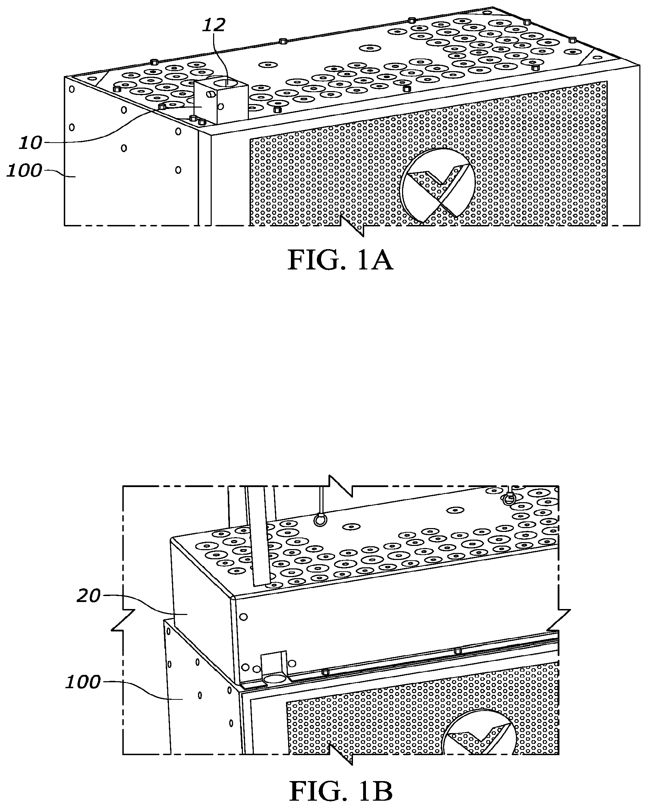

Conventional RPP designs have attempted to manage cable entry using various conduit plate configurations. FIG. 1A generally illustrates an example of a prior art flat conduit plate 10 for a remote power panel (RPP) 100, wherein openings 12 are provided on a planar surface to route both the high-voltage power cables and the low-voltage control wires into a cabinet of the RPP 100. The flat conduit plates often provide poor tool clearance during installation, complicate access to low-voltage conduit installations, and require use of cover pieces that necessitate front-side screwdriver access, which may become blocked by installed high-voltage power cables.

FIG. 1B generally illustrates an example of a prior art raised conduit plate 20 for the RPP 100, wherein an entry surface is elevated to the cabinet to provide additional space for routing cables. However, the raised conduit plates typically do not include any integrated protection for the low-voltage control wires, leaving such wiring exposed upon entering the cabinet. Installers are forced to determine ad hoc methods to protect and route the low voltage control wiring, and the constrained footprint around the raised plate can make clean and organized routing difficult.

Accordingly, systems, such as those described herein, configured to provide a separation between high-voltage power cables and low-voltage control wires, facilitate safer installation and maintenance, may be desirable.

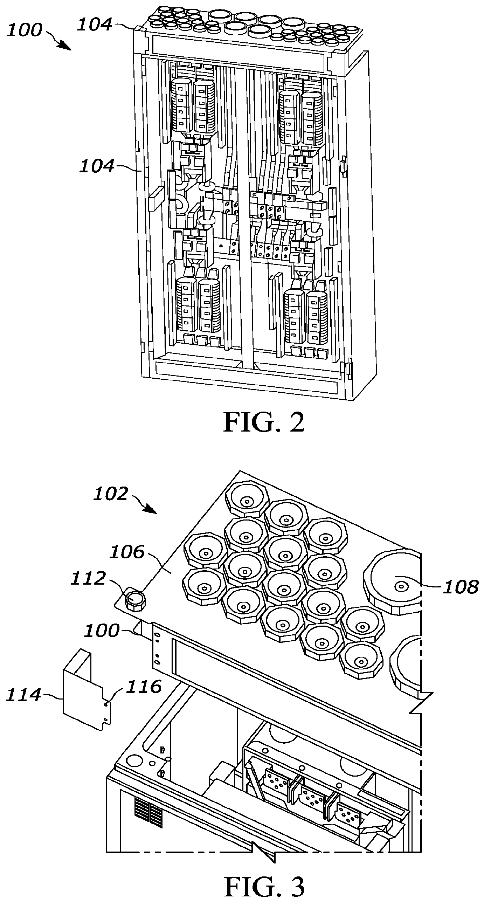

In some examples, and as generally described with respect to FIG. 2, the RPP 100 of a power distribution system may include a feed box 102 and a cabinet housing 104. The feed box 102 may be attached to the cabinet housing 104 and may be configured to receive incoming high-voltage power cables and low-voltage control wiring. The cabinet housing 104 may be configured to receive and enclose the incoming high-voltage power cables and low-voltage control wiring. The high-voltage power cables are configured to supply electrical power to downstream loads, and the low-voltage control wires are configured to provide monitoring, signaling, or communication functional within the power distribution system.

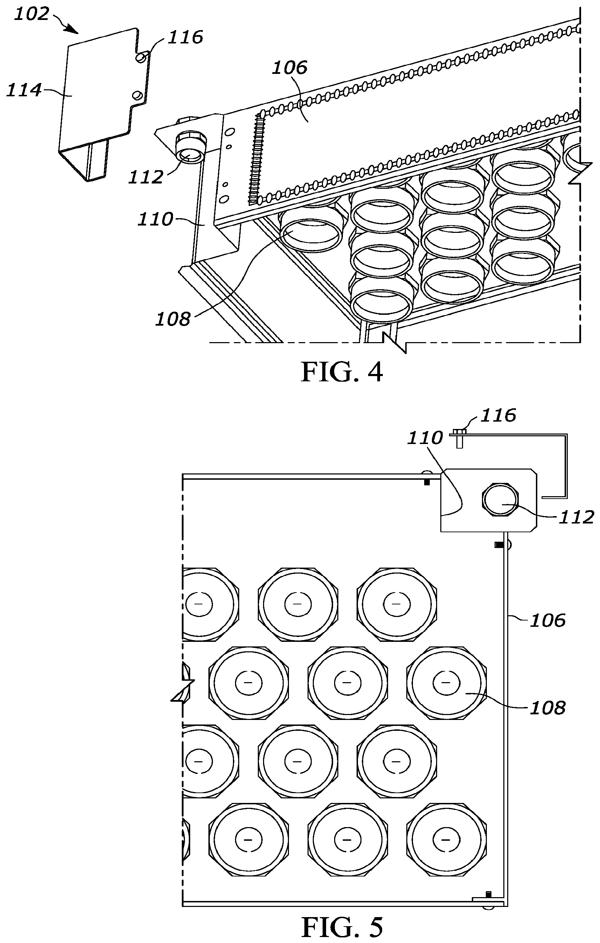

Referring now to FIGS. 3-5, the feed box 102 may include a feed box housing 106, one or more first conduit entries 108, a recessed region 110, one or more second conduit entries 112, and a cover 114. The feed box housing 106 is attached to the cabinet housing 104 of the RPP 100. In some examples, the feed box housing 106 is attached to the top of the cabinet housing 104. In some examples, the feed box housing 106 is attached to the bottom of the cabinet housing 104. In some examples, the feed box housing 106 is attached to a side of the cabinet housing 104. The feed box housing 106 is configured to enclose and support the first conduit entries 108 and the second conduit entries 112.

The first conduit entries 108 are defined in the feed box housing 106 and are configured to receive the high-voltage power cables. The first conduit entries 108 are further configured to guide the high-voltage power cables into the cabinet housing 104 of the RPP 100 for electrical connection to internal power distribution components. The recessed region 110 is located along one side of the cabinet housing 104. The recessed region 110 may be formed as a notch, cutout, or cavity integrally formed into the feed box housing 106. The recessed region 110 may extend partially or fully along a side surface of the feed box housing 106. The recessed region 110 may be configured to guide the low-voltage control wires along a desired routing path into the cabinet housing 104. The recessed region 110 is configured to physically separate the second conduit entries 112 from the first conduit entries 108 and allows an operator to access, install, or maintain the low-voltage control wires without interfering with the installation or operation of the high-voltage power cables, and without requiring shutdown of the RPP 100. The second conduit entries 112 are defined within the recessed region 110 and are configured to receive the low-voltage control wires.

In some examples, the recessed region 110 is open to the exterior environment to allow access to the low-voltage control wires. In some examples, the recessed region 110 may be enclosed by the cover 114. The cover 114 is configured to protect the second conduit entries 112 and the low-voltage control wires routed through the recessed region 110. The cover 114 may be removably or pivotally attached to the feed box housing 106 and is configured to allow access to the recessed region 110 without requiring removal or interaction with the high-voltage power cables routed through the first conduit entries 108. The cover 114 may include a locking feature 116 configured to secure the cover 114 in a closed position. In some examples, the locking feature 116 is one or more screws. In some examples, the locking feature 116 is a clip. In some examples, the locking feature 116 is a latch or another suitable attachment device.

In some examples, an apparatus for a remote power panel. The apparatus comprises: a housing configured to attach to a cabinet housing of the remote power panel; a first conduit entry defined in the housing and configured to receive a plurality of power cables; a recessed region formed along a side of the housing; and a second conduit entry positioned within the recessed region and configured to receive a plurality of control cables. The recessed region physically separates the second conduit entry from the first conduit entry.

In some examples, the feed box further comprises a cover configured to cover the recessed region. In some examples, the cover includes a locking feature to secure the cover in a closed position.

Implementations the systems, algorithms, methods, instructions, etc., described herein can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. In the claims, the term "processor" should be understood as encompassing any of the foregoing hardware, either singly or in combination. The terms "signal" and "data" are used interchangeably.

As used herein, the term module can include a packaged functional hardware unit designed for use with other components, a set of instructions executable by a controller (e.g., a processor executing software or firmware), processing circuitry configured to perform a particular function, and a self-contained hardware or software component that interfaces with a larger system. For example, a module can include an application specific integrated circuit (ASIC), a Field Programmable Gate Array (FPGA), a circuit, digital logic circuit, an analog circuit, a combination of discrete circuits, gates, and other types of hardware or combination thereof. In other examples, a module can include memory that stores instructions executable by a controller to implement a feature of the module.

Further, in one aspect, for example, systems described herein can be implemented using a general-purpose computer or general-purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

The above-described examples, implementations, and aspects have been described in order to allow easy understanding of the present disclosure and do not limit the present disclosure. On the contrary, the disclosure is intended to cover various modifications and equivalent arrangements included within the scope of the appended claims, which scope is to be accorded the broadest interpretation to encompass all such modifications and equivalent structure as is permitted under the law.

Further examples are set out in the clauses below:
1. An apparatus for a remote power panel, comprising:
   a housing configured to attach to a cabinet housing of the remote power panel;
   a first entry defined in the housing and configured to receive a plurality of power cables;
   a recessed region disposed on a side of the housing; and
   a second conduit entry positioned within the recessed region and configured to receive a plurality of control cables,
   wherein the recessed region physically separates the second conduit entry from the first conduit entry.
2. The apparatus of clause 1, wherein the apparatus further comprises a cover configured to cover the recessed region.
3. The apparatus of clause 2, wherein the cover includes a locking feature to secure the cover in a closed position.
4. The apparatus of clause 2, wherein the cover is pivotally attached to the housing.
5. The apparatus of any one of the preceding clauses, wherein the recessed region is configured to guide the plurality of control cables along a routing path into the cabinet housing of the remote power panel.
6. The apparatus of any one of the preceding clauses, wherein the recessed region is configured to provide separation enabling installation or maintenance of the control cables without interference from the power cables.
7. The apparatus of any one of the preceding clauses, wherein the housing further comprises a feed-box portion attached to a top of the cabinet housing, bottom of the cabinet housing, or side of the cabinet housing.
8. The apparatus of any one of the preceding clauses, wherein the power cables received by the first conduit entry are configured to provide power and the control cables received by the second conduit entry are configured to provide control signals.
9. The apparatus of any one of the preceding clauses, further comprising a plurality of second conduit entries disposed within the recessed region.
10. A method for routing cables into a remote power panel, the method comprising:
   receiving, through a first conduit entry of a housing attached to a cabinet housing of the remote power panel, a plurality of power cables;
   routing, through a second conduit entry positioned within a recessed region of the housing, a plurality of control cables; and
   separating the control cables from the power cables using a recessed region.
11. The method of clause 10, further comprising covering the recessed region with a cover.
12. The method of clause 11, further comprising locking the cover in a closed position using a locking feature.
13. The method of any one of clauses 10-12, wherein routing the plurality of control cables comprises guiding the control cables along a routing path defined at least by the recessed region.
14. The method of any one of clauses 10-13, further comprising installing or maintaining the control cables within the recessed region without interacting with the plurality of power cables.
15. A power distribution system comprising:
   a cabinet housing of a remote power panel;
   a feed box attached to the cabinet housing, wherein the feed box comprising:
      a first conduit entry configured to receive a plurality of power cables;
      a recessed region formed along a side of the feed box; and
      a second conduit entry positioned within the recessed region and configured to receive a plurality of control cables,
      wherein the recessed region separates the second conduit entry from the first conduit entry.
16. The power distribution system of clause 15, further comprising a cover attached to the feed box and configured to selectively enclose the recessed region.
17. The power distribution system of clause 16, wherein the cover is removably or pivotally attached to the feed box.
18. The power distribution system of clause 16 or 17, wherein the cover includes a locking feature including at least one of a screw, a latch, or a clip.
19. The power distribution system of any one of clauses 16-18, wherein the recessed region is configured to allow access to the control cables without requiring shutdown of the remote power panel.
20. The power distribution system of any one of clauses 16-19, wherein the recessed region is formed as a notch, cutout, or cavity integrally defined in the feed box.

Obviously, many modifications and variations of the present disclosure are possible in light of the above teachings. It is contemplated that all features of all claims and of all examples can be combined with each other, so long as such combinations would not contradict one another. It is, therefore, to be understood that within the scope of the appended claims, the system and methods described herein may be practiced otherwise than as specifically described.

## Claims

1. An apparatus for a remote power panel, comprising:
a housing configured to attach to a cabinet housing of the remote power panel;
a first conduit entry defined in the housing and configured to receive a plurality of power cables;
a recessed region disposed on a side of the housing; and
a second conduit entry positioned within the recessed region and configured to receive a plurality of control cables,
wherein the recessed region physically separates the second conduit entry from the first conduit entry.

2. The apparatus of claim 1, wherein the apparatus further comprises a cover configured to cover the recessed region.

3. The apparatus of claim 2, wherein the cover includes a locking feature to secure the cover in a closed position.

4. The apparatus of claim 2 or 3, wherein the cover is pivotally attached to the housing.

5. The apparatus of any one of the preceding claims, wherein the recessed region is configured to guide the plurality of control cables along a routing path into the cabinet housing of the remote power panel.

6. The apparatus of any one of the preceding claims, wherein the recessed region is configured to provide separation enabling installation or maintenance of the control cables without interference from the power cables.

7. The apparatus of any one of the preceding claims, wherein the housing further comprises a feed-box portion attached to a top of the cabinet housing, bottom of the cabinet housing, or side of the cabinet housing.

8. The apparatus of any one of the preceding claims, wherein the power cables received by the first conduit entry are configured to provide power and the control cables received by the second conduit entry are configured to provide control signals.

9. The apparatus of any one of the preceding claims, further comprising a plurality of second conduit entries disposed within the recessed region.

10. A method for routing cables into a remote power panel, the method comprising:
receiving, through a first conduit entry of a housing attached to a cabinet housing of the remote power panel, a plurality of power cables;
routing, through a second conduit entry positioned within a recessed region of the housing, a plurality of control cables; and
separating the control cables from the power cables using a recessed region.

11. The method of claim 10, further comprising covering the recessed region with a cover; and optionally
further comprising locking the cover in a closed position using a locking feature.

12. The method of claim 10 or 11, wherein routing the plurality of control cables comprises guiding the control cables along a routing path defined at least by the recessed region; or optionally
further comprising installing or maintaining the control cables within the recessed region without interacting with the plurality of power cables.

13. A power distribution system comprising:
a cabinet housing of a remote power panel;
a feed box attached to the cabinet housing, wherein the feed box comprising:
a first conduit entry configured to receive a plurality of power cables;
a recessed region formed along a side of the feed box; and
a second conduit entry positioned within the recessed region and configured to receive a plurality of control cables,
wherein the recessed region separates the second conduit entry from the first conduit entry.

14. The power distribution system of claim 13, further comprising a cover attached to the feed box and configured to selectively enclose the recessed region.

15. The power distribution system of claim 14, wherein the cover is removably or pivotally attached to the feed box; or optionally
wherein the cover includes a locking feature including at least one of a screw, a latch, or a clip; or optionally
wherein the recessed region is configured to allow access to the control cables without requiring shutdown of the remote power panel; or optionally
wherein the recessed region is formed as a notch, cutout, or cavity integrally defined in the feed box.
